# EUROPÄISCHE PATENTSCHRIFT

(11) **EP 3 615 359 B1**
(45) Veröffentlichungstag und Bekanntmachung des Hinweises auf die Patenterteilung: **20.01.2021**
(21) Anmeldenummer: 18715579.1
(22) Anmeldetag: 27.03.2018
(51) Int. Cl.: B60G 21/055, F16H 1/28, H02K 7/116

(54) **WANKSTABILISATOR SOWIE VERWENDUNG EINES WANKSTABILISATORS IN EINEM KRAFTFAHRZEUG**
ROLL STABILISER AND USE OF A ROLL STABILISER IN A MOTOR VEHICLE
STABILISATEUR ANTI-ROULIS ET UTILISATION D'UN STABILISATEUR ANTI-ROULIS DANS UN VÉHICULE À MOTEUR

(30) Priorität: 27.04.2017 DE 102017207118
(43) Veröffentlichungstag der Anmeldung: 04.03.2020
(73) Patentinhaber: ZF Friedrichshafen AG, 88046 Friedrichshafen (DE)
(72) Erfinder: BLANKENSPECK, Dirk, 49356 Diepholz (DE)
(74) Vertreter: ZF Friedrichshafen AG
(86) Internationale Anmeldenummer: PCT/EP2018/057692
(87) Internationale Veröffentlichungsnummer: WO 2018/197134

(56) Entgegenhaltungen:
- WO-A1-2017/202565
- DE-A1-102007 038 264
- DE-A1-102014 205 262
- DE-A1-102017 001 382
- DE-B3- 10 239 657
- US-A1- 2008 150 241

## Beschreibung

Die Erfindung betrifft einen Wankstabilisator nach dem Oberbegriff des Anspruchs 1, sowie dessen Verwendung in einem Kraftfahrzeug. Ein solcher Wankstabilisator ist aus DE 10 2007 038 264 A1 bekannt.

Aktive Wankstabilisatoren mit einem hydraulischen oder elektromotorischen Aktuator sind bekannt. Dabei wird ein passiver Wankstabilisator aufgetrennt und ein Aktuator bestehend aus Motor und Getriebe zwischen die Stabilisatorelemente geschaltet. Dieser Aktuator kann die beiden Stabilisatorelemente gegeneinander verdrehen, um das Wanken eines Kraftfahrzeugs aufgrund von Anregungen der Fahrbahn oder bei Ausweichen oder Kurvenfahrten zu minimieren. Dabei sind hohe Stellkräfte erforderlich, welche durch eine entsprechende Übersetzung eines Getriebes ermöglicht werden. Aufgrund des begrenzten Bauraums an der jeweiligen Fahrzeugachse sind Motor und Getriebe in einem Gehäuse des aktiven Wankstabilisators axial nebeneinander angeordnet.

Durch die DE 10 2014 205 262 A1 wurde ein aktiver Wankstabilisator bekannt, wobei ein Aktuator einen Elektromotor als Schwenkmotor aufweist, der ein nachgeschaltetes dreistufiges Planetengetriebe antreibt. Dessen letzte Stufe bildet mit seinem Planetenträger einen Abtrieb und verdreht ein Stabilisatorelement gegenüber dem Gehäuse des Aktuators. Der Elektromotor und das Planetengetriebe sind nebeneinander in einem gemeinsamen Gehäuse aufgenommen, wobei eine Seite des Gehäuses mit einem ersten Stabilisatorelement verbunden ist. Bei Aktivierung des Elektromotors werden die beiden Stabilisatorelemente gegeneinander verdreht, um Wankbewegungen des Fahrzeugaufbaus kontrolliert zu beeinflussen und zu minimieren.

Aus DE 102 39 657 B3 ist ein aktiver Wankstabilisator bekannt. Das Getriebe des dort beschriebenen aktiven Wankstabilisators ist als Umlaufgetriebe ausgebildet, wobei der Elektromotor und das Getriebe das Ende einer Stabilisatorhälfte ringförmig umschließen und sich radial gegenüber dieser Stabilisatorhälfte abstützen.

Weiterhin sei auf US 2008/150241 A1 verwiesen, welche einen aktiven Wankstabilisator mit Merkmalen des Oberbegriffs von Anspruch 1 offenbart. Ein zum Antrieb dienender Elektromotor weist eine Abtriebswelle auf, die zur Rotationsachse der Stabilisatorelemente versetzt ist. Ein im Wesentlichen innerhalb des Elektromotors angeordnetes Getriebe ist nicht vorhanden.

Ausgehend von dem vorgenannten Stand der Technik, verfolgt die Erfindung eine Verbesserung einer aktiven Wankstabilisierung hinsichtlich des zur Verfügung stehenden Bauraums sowie der Optimierung des Antriebs.

Die Erfindung umfasst die Merkmale der unabhängigen Patentansprüche. Vorteilhafte Ausgestaltungen ergeben sich aus den Unteransprüchen.

Nach einem ersten Aspekt betrifft die Erfindung einen Wankstabilisator für ein Kraftfahrzeug, aufweisend einen Aktuator mit einem Gehäuse mit einem an diesem verdrehfest gekoppelten ersten Stabilisatorelement und einem in dem Gehäuse befindlichen und Elektromotor, dessen Stator in dem Gehäuse festgelegt ist. Das Getriebe ist antriebsseitig mit dem Elektromotor gekoppelt und abtriebsseitig mit einem zweiten Stabilisatorelement gekoppelt, so dass die Stabilisatorelemente gegeneinander elektromechanisch verdrehbar sind. Erfindungsgemäß ist das Getriebe im Wesentlichen innerhalb des Elektromotors angeordnet. Weiterhin erfindungsgemäß sind die Endbereiche der Stabilisatorelemente innerhalb des Rotors angeordnet und ragen in das Getriebegehäuse hinein. Dabei weisen die Endbereiche der Stabilisatorelemente jeweils eine Außenverzahnung auf, wobei das Getriebegehäuse drehbar um die Endbereiche herum gelagert ist. Mit innerhalb des Elektromotors ist gemeint, dass das Getriebe in axialer Richtung gesehen die Abmessungen des Elektromotors nicht wesentlich überragt. In einem Elektromotor, der einen Hohlrotor aufweist, befindet sich das Getriebe somit sowohl innerhalb des Stators, als auch innerhalb des Stators befindlichen Rotors. Das Getriebe ragt somit nicht wesentlich über die Wicklungen des Stators hinaus. In einer bevorzugten Ausführungsform ist der Hohlrotor-Elektromotor als ein Vernier-Motor ausgebildet. Es ergibt sich damit eine kompakte Antriebseinheit, da E-Motor und Getriebe nicht axial nebeneinander in dem Gehäuse des Aktuators untergebracht werden müssen. Dadurch kann die axiale Erstreckung des Aktuators deutlich reduziert werden. Bevorzugt reduziert sich die axiale Erstreckung (Breite des Aktuators) auf die Hälfte, höchst vorzugsweise auf ein Drittel eines vergleichbaren Aktuators. Es wird wenig Bauraum für den aktiven Wankstabilisator benötigt, welches mit Blick auf enge Bauraumverhältnisse im Bereich der Vorder- und/oder Hinterachse bei Fahrzeugen vor Vorteil ist.

Eine Steuerung nimmt die aktuelle Fahrsituation auf und gibt Signale an eine Elektronik des Aktuators, so dass der Motor das Getriebe in eine der möglichen Drehrichtungen dreht und dabei in Abhängigkeit von der Fahrsituation eine gegenläufige Verdrehung der Stabilisatorelemente bewirkt. Die Neigung des Fahrzeugs in eine kurvenäußere Richtung kann damit verändert bzw. minimiert werden. Ebenfalls kann das Wanken des Fahrzeugs bedingt durch eine Fahrbahnunebenheit ausgesteuert werden, so dass die Anregung im Idealfall zu keiner Wankbewegung des Fahrzeugs führt. Die Insassen nehmen weniger Neigung in Kurven als angenehmer war und bei Anregungen aufgrund von Fahrbahnunebenheiten ergibt sich ein Fahrgefühl wie auf einer ebenen Fahrbahn.

Der Elektromotor (E-Motor) ist vorzugsweise als bürstenloser Vernier-Elektromotor ausgebildet. Diese Art von E-Motoren bildet einen in hohem Maße effizienten Elektromotor aus, der im Vergleich zu herkömmlichen Elektromotoren eine verbesserte Volumeneffizienz aufweist. Ein Vernier-Motor kann bei geringerem Volumen ein höheres Drehmoment erzeugen als ein herkömmlicher E-Motor mit entsprechend größerem Volumen. Mit anderen Worten kann ein E-Motor verkleinert werden und gleichzeitig eine zumindest gleiche oder sogar höhere Leistung aufbringen. Anders gesagt kann die Größe im Vergleich zu den herkömmlich in Wankstabilisatoren eingesetzten E-Motor verringert werden, so dass entweder der Bauraum für weitere innerhalb des Aktuators, speziell innerhalb des E-Motors benötigte Bauteile, wie ein Getriebe zur Verfügung steht. Oder es kann der Aktuator insgesamt verkleinert werden. Es kann somit für das Fahrwerk an der jeweiligen Achse ein insgesamt sehr kompakt bauender Wankstabilisator dargestellt werden, so dass der benötigte Bauraum z.B. für die Lenkung, insbesondere Hinterachslenkung, oder einen, vorzugsweise elektrischen Achsantrieb genutzt werden kann.

Ein Vernier-Motor ist nicht nur kleiner als ein vergleichbarer Elektromotor. Er ist auch leichter und leistungseffizienter als ein vergleichbarer herkömmlicher E-Motor und weist ausreichend Drehmoment auf, um mittels des Getriebes eine Verdrehung der Stabilisatorelemente zueinander zu bewirken. Bei Vernier-Motoren sind außen am Stator Magnete angeordnet, die jedoch gegenüber herkömmlichen E-Motoren in ihrer Größe deutlich geringer ausfallen. Durch die Bauart kann daher maßgeblich die Größe und damit das Gewicht der Magnete reduziert werden. Dadurch müssen weniger seltene Erden zur Herstellung der Magnete verwendet werden, was den Vernier-Motor deutlich kostengünstiger macht als ein vergleichbarer E-Motor mit gleicher Leistung.

Der Elektro-Motor ist mit seiner Längsachse parallel zur Längsachse des Getriebes angeordnet. Dabei sind das Getriebe und das Aktuatorgehäuse derart angeordnet, dass auch die Längsachsen der Enden Stabilisatorelemente achsparallel hierzu angeordnet sind. Die Längsachsen liegen bevorzugt aufeinander und es ergibt sich eine gemeinsame Längsachse. Es ergibt sich durch den Vernier-Motor insgesamt eine vorteilhafte Bauraumsituation, die eine Integration des Getriebes in den E-Motor ermöglicht.

In einer weiteren bevorzugten Ausführungsform ist das Getriebe als Umlaufrädergetriebe ausgebildet. Umlaufrädergetriebe können hohe Drehmomente übertragen und weisen eine vorteilhafte Laufruhe auf.

Der Elektro-Motor weist einen gegenüber dem Gehäuse des Aktuators drehfest angeordneten Stator auf, wobei ein innerhalb des Stators drehbar gelagerter Rotor mit dem Gehäuse des Getriebes gekoppelt ist. Rotor und Getriebe sind dabei drehfest miteinander verbunden, so dass das Drehmoment des E-Motors unmittelbar auf das Getriebegehäuse wirkt.

Wie bereits ausgeführt, sind erfindungsgemäß die Endbereiche der Stabilisatorelemente innerhalb des Rotors angeordnet und ragen in das Getriebegehäuse hinein. Dabei weisen die Endbereiche der Stabilisatorelemente jeweils eine Außenverzahnung auf, wobei das Getriebegehäuse drehbar um die Endbereiche herum gelagert ist. Getriebegehäuse, Rotor sowie die Enden der Stabilisatorelemente haben eine gemeinsame Längsachse. Die Lagerung des Gehäuses kann als Gleitlagerung oder bevorzugt über eine Wälzlagerung, wie ein Kugellager oder ein Nadellager ausgeführt sein. Es ist offensichtlich, dass sich durch die Anordnung des Getriebes innerhalb des Rotors eine kompakte Bauweise des Aktuators für eine aktive Wankstabilisierung erzielen lässt.

In einer bevorzugten weiteren Ausführungsform sind die Enden, genauer die Endbereiche der Stabilisatorelemente, derart ausgebildet, dass diese zumindest innerhalb des Getriebegehäuses formschlüssig ineinander greifen. Zusätzlich zu der Lagerung in dem Getriebegehäuse kann es bei dieser Ausführung ermöglicht werden, dass Biegekräfte bzw. -momente besser aufgenommen werden können. Beispielsweise weist ein Endbereich eines ersten Stabilisatorelements einen Absatz auf, der in einem Sackloch am Ende des Endbereiches des zweiten Stabilisatorelements drehend gleitet. Das Gleiten kann durch einen Schmierstoff oder durch eine selbstschmierende Buchse bzw. Hülse oder ein Lager optimiert werden, die beim Zusammenbau auf den Absatz gesteckt wird.

Das Getriebe wird gebildet durch zumindest ein Außenrad, welches drehbar innerhalb des Getriebegehäuses parallel und exzentrisch zur Längsachse gelagert ist. Das Außenrad weist dabei zwei Außenverzahnungsabschnitte mit einer unterschiedlichen Anzahl an Zähnen auf, welche mit je einer der Außenverzahnung der Endbereiche kämmen. Bevorzugt weist die Außenverzahnung des Endbereiches des zweiten Stabilisatorelements eine höhere Anzahl an Zähnen auf, als die Außenverzahnung des Endbereiches des ersten Stabilisatorelements.

Wird der Elektromotor bestromt, so wird der Rotor in die eine oder andere Richtung in Drehbewegung versetzt. Das drehfest mit dem Rotor verbundene Gehäuse wird gleichermaßen mitgedreht und das Außenrad wird durch die Drehbewegung des Gehäuses ebenfalls in Drehbewegung versetzt, weil das erste Stabilisatorelement verdrehfest an dem bzw. in dem Gehäuse des Aktuators befestigt ist und sich durch die Drehung des Rotors bzw. des Getriebegehäuses eine Zwangsdrehbewegung des Außenrades deshalb ergibt, weil ein erster Außenverzahnungsabschnitt des Außenrads mit der Außenverzahnung des Endbereichs des ersten Stabilisatorelements kämmt. Gleichzeitig kämmt der zweite Außenverzahnungsabschnitt des Außenrades mit der Außenverzahnung des Endbereichs des zweiten Stabilisatorelements und versetzt dieses dabei in eine Drehbewegung. Die Drehbewegung des zweiten Stabilisatorelements ist dabei proportional zur Drehbewegung des Rotors.

Üblicherweise liegt selbst bei hochgenauer Fertigung der Zahnräder in einem Getriebe ein Spiel zwischen diesen vor. Wird die Drehrichtung des Motors geändert, so kann es aufgrund dieses Spiels zum Flankenschlagen innerhalb des Getriebes kommen, weil beim Umschalten der Drehrichtung dieses Spiel zwischen den Zahnflanken zweier Zahnräder überwunden werden muss. Schlagen die Flanken aneinander, kann sich dieses Betriebsgeräusch über den Aktuator und die Stabilisatorelemente in die Karosserie übertragen. Um eine Geräuschminimierung herbeizuführen ist in einer besonders bevorzugten Ausführung in dem Getriebe ein Mittel, vorzugsweise eine Feder, vorgesehen. Diese Feder spannt einzelne oder mehrere Zahnräder gegeneinander vor, so dass in wirkungsvoller Weise eine Geräuschminimierung erzielt werden kann.

Bevorzugt weist das Außenrad wenigstens ein zusätzliches Zahnrad auf, welches mittels einer Feder gegenüber dem Außenrad radial und/oder axial vorgespannt ist. Das Außenrad wird dabei gegenüber zumindest einer Außenverzahnung eines Endbereiches eines Stabilisatorelements vorgespannt.

In einer weiteren bevorzugten Ausführung können zur weiteren akustischen Entkopplung des Aktuators ein oder mehrere Entkopplungselemente außerhalb des Getriebes, z.B. zwischen Getriebe und dem zweiten Stabilisatorelement vorgesehen sein. Diese können sowohl innerhalb des Gehäuses des Aktuators oder auch außerhalb in die Stabilisatorelemente selbst integriert sein.

Die vorgenannten Federn können aus Federstahl oder aus einem Elastomer oder weiteren geeigneten elastischen Werkstoffen bestehen und in Form eines Ringes oder in Form von Scheiben ausgebildet sein.

Nach einem weiteren Aspekt der Erfindung ist eine Verwendung des erfindungsgemäßen Wankstabilisators in einem Fahrwerk eines Kraftfahrzeuges vorgesehen. Der aktive Wankstabilisator kann an der Vorderachse und/oder an der Hinterachse angeordnet sein. Aufgrund des geringeren Energiebedarfs des erfindungsgemäßen Vernier-Elektromotors wird weniger Energie aus dem Bordnetz des Kraftfahrzeuges für die Wankstabilisierung entnommen als bei Einsatz eines Aktuators mit herkömmlichem E-Motor. Neben dem geringeren Energieeinsatz bei der Verdrehung ergeben sich zudem geringere Betriebsgeräusche für den Aktuator aufgrund der vorgenannten Entkopplung. Zudem ist die Gewichtsreduzierung im Sinne der Wirtschaftlichkeit bei Fahrzeugen mit aktiver Wankstabilisierung.

Der vorgenannte Antrieb mittels Vernier-Motor eignet sich auch für andere Anwendungen, beispielsweise bei Fensterhebern in Fahrzeugtüren oder ähnlichen Stellantrieben. Auch hier wird ein kompakter, energieeffizienter sowie drehmomentstarker Antrieb benötigt.
Die Erfindung wird nachfolgend anhand bevorzugter Ausführungsformen unter Bezugnahme auf die Zeichnung beschrieben. In der Zeichnung zeigen:
- Fig. 1: eine schematische Ansicht eine Fahrzeugachse mit aktivem Wankstabilisator,
- Fig. 2: eine Detailansicht eines Wankstabilisators aus dem Stand der Technik,
- Fig. 3: eine Detailansicht einer Ausführung eines erfindungsgemäßen Wankstabilisators.

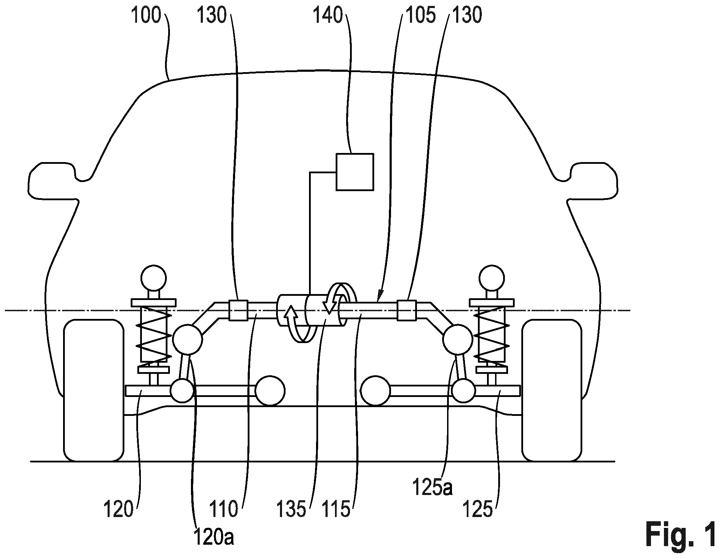

Figur 1 zeigt eine schematische Darstellung eines Fahrzeugs 100 mit einem Wankstabilisator 105 gemäß einem Ausführungsbeispiel der vorliegenden Erfindung. Der Wankstabilisator 105 ist als zweigeteilter Drehstab mit einem ersten Stabilisatorelement 110 und einem zweiten Stabilisatorelement 115 realisiert. Hierbei ist ein Ende des ersten Stabilisatorelements 110 mit einem ersten Radaufhängungselement 120 des Fahrzeugs 100 und ein Ende des zweiten Stabilisatorelements 115 mit einem zweiten Radaufhängungselement 125 des Fahrzeugs 100 verbunden. Es sind die Enden der Stabilisatorelemente 110, 115 mit gelenkig gelagerten Pendelstützen 120a, 125a verbunden, die mit dem Fahrwerk verbunden sind. Bei den Radaufhängungselementen 120, 125 handelt es sich beispielsweise um gegenüberliegende und jeweils einem Rad zugeordneten Querlenker des Fahrzeugs 100. Die Stabilisatorelemente 110, 115 sind jeweils mittels eines karosseriefesten Aufbaulagers 130 um eine gemeinsame Drehachse D-D drehbar an einem Fahrgestell des Fahrzeugs 100 befestigt. Die Drehachse D-D entspricht hierbei beispielhaft einer Querachse des Fahrzeugs 100. Die Stabilisatorelemente 110, 115 können mittels eines Aktuators 135 gegeneinander verdreht werden, wenn eine Steuerung 140 beispielsweise eine Fahrbahnunebenheit sensiert und diese Anregung durch eine gezielte Verdrehbewegung ausgesteuert wird, so dass die Karosserie keine Wankbewegung durch die Anregung erfährt, wie dieses aufgrund des Kopiereffektes bei einem passiven Wankstabilisator der Fall wäre.

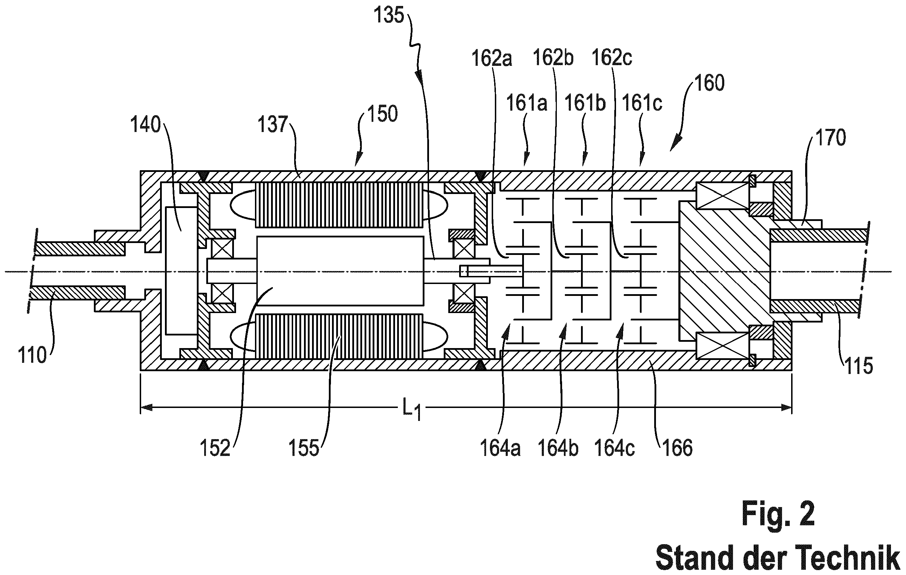

Figur 2 zeigt den Aufbau eines Aktuators 135 eines herkömmlichen aktiven Wankstabilisators 105 gemäß dem Stand der Technik. Der Wankstabilisator 105 weist einen Aktuator 135 mit einem Gehäuse 137 aus. In dem Gehäuse 137 ist ein E-Motor 150 mit gehäusefestem Stator 155 sowie in dem Gehäuse 137 drehbar gelagertem Rotor 152 angeordnet. Des Weiteren ist in Richtung des E-Motorseitigen Endes eine Steuerung bzw. Elektronik 140 zum Betrieb des Aktuators 135 in dem Gehäuse 160 untergebracht. Axial neben dem E-Motor ist ein Getriebe 160 in Form eines Planetengetriebes angeordnet. Der E-Motor 150 ist mit dem ersten Sonnenrad 162a der ersten Planetenstufe 161a wirkverbunden. Das Planetengetriebe weist insgesamt drei Planetenstufen 161a, 161b, 161c mit drei Planetenträgern 164a, 164b, 164c auf. Die Planetenräder der jeweiligen Planetenträger 164a, 164b, 164c kämmen mit einem Hohlrad 166, welches an der Innenseite des Gehäuses angeordnet ist. Ein erstes Stabilisatorelement 110 ist mit dem E-motorseitigen Ende des Aktuators 135 stoffschlüssig verbunden. Das zweite Stabilisatorelement 115 ist mit dem letzten Planetenträger 164c wirkverbunden. Das Drehmoment des E-Motors 150 wird über das Getriebe 160 auf den Stabilisatorelement 115 hoch übersetzt übertragen, so dass es zu einer Verdrehung des Stabilisatorelements 115 gegenüber dem Gehäuse 137 bzw. letztlich gegenüber dem Stabilisatorelement 110 kommt.

Das Gehäuse weist eine axiale Erstreckung L1 auf, die sich durch die Anordnung von E-Motor 150 neben dem Getriebe 160 ergibt. Es ist deutlich ersichtlich, dass der E-Motor 150 und das Getriebe 160 jeweils etwa die Hälfte der Breite des Aktuators als Bauraums des Aktuators in Anspruch nehmen.

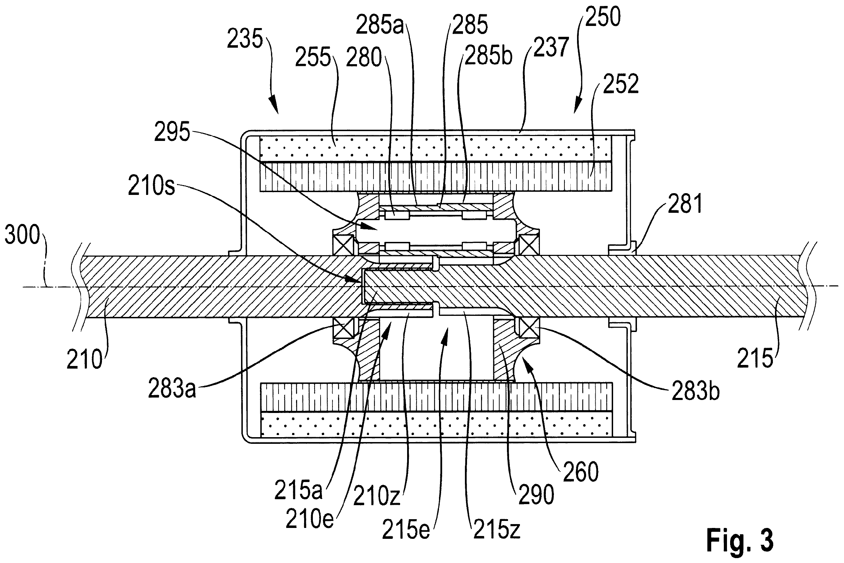

Figur 3 zeigt eine schematische Darstellung einer besonderen Ausführung eines Aktuators 235 mit einem speziellen Umlaufrädergetriebe 260, welches innerhalb des Elektro-Motors, hier eines Vernier-Motors, bauraumsparend angeordnet ist. Der Aktuator 235 umfasst ein Gehäuse 237, welches an seiner Innenseite einen verdrehfest angeordneten Stator 255 des Vernier-Motors aufweist. Innerhalb des Stators 255 ist ein Rotor 252 gelagert. Ein erstes Stabilisatorelement 210 ist drehfest, z.B. stoffschlüssig mit dem Gehäuse 237 verbunden und weist einen Endbereich 210e auf, der ins Innere des Aktuators ragt. Ein zweites Stabilisatorelement 215 weist an einem Endbereich 215e einen Absatz 215a auf. Mit diesem Absatz 215a ist das zweite Stabilisatorelement 215 innerhalb eines Sackloches 210s des Endbereichs 210e des ersten Stabilisatorelements 210 drehbar gelagert. Des Weiteren ist das zweite Stabilisatorelement 215 drehbar in einem Lager 281 im Gehäuse 237 gelagert. Das Getriebe 260 ist mit jeweils einem Lager 283a, 283b um die Endbereiche 210e, 215e der Stabilisatorelemente 210, 215 herum drehbar gelagert. Das Getriebegehäuse 290 ist mit dem Rotor 252 drehfest verbunden. Die Stabilisatorelemente 210, 215, der Rotor 252 und das Getriebegehäuse 290 weisen eine gemeinsame Längsachse 300 auf. In dem Getriebegehäuse 290 ist ein Lagerbolzen 295 mittels Lagern 283a, 283b drehbar, jedoch exzentrisch gegenüber dem Getriebegehäuse 290 bzw. der Längsachse 300 gelagert. Um den Lagerbolzen 295 ist ein Außenrad 285 koaxial mittels Lagern 280 drehbar gelagert. Das Außenrad weist zwei Bereiche 285a, 285b mit unterschiedlichen Außenverzahnungen auf, wobei die Anzahl der Zähne auf dem einen Bereich hier um einen Zahn höher als die Anzahl der Zähne auf dem anderen Bereich ist. Die innerhalb des Aktuatorgehäuses 237 angeordneten Endbereiche 210e, 215e der Stabilisatorelemente 210, 215 weisen jeweils eine Außenverzahnung 210z, 215z auf, wobei deren Zähneanzahl gleich ist.

Bei Bestromen des E-Motors setzt sich der Rotor 252 in Drehbewegung und das Getriebegehäuse 290 wird mitgedreht. Dabei kämmt das Außenrad 285 um die Außenverzahnung 210z des Endes des ersten Stabilisatorelements 210, da der Stator 255 und das erste Stabilisatorelement 210 verdrehfest mit dem Gehäuse 237 des Aktuators 235 gekoppelt sind. Zwangsweise wird dadurch gegenüber dem ersten Stabilisatorelement 210 das zweite Stabilisatorelement 215 in Drehbewegung versetzt, da dessen Ende mit seiner Außenverzahnung 215z ebenfalls mit dem Außenrad 285 kämmt. Aufgrund der größeren Anzahl an Zähnen ergibt sich die verlangsamte Drehbewegung des zweiten Stabilisatorelements 215, wobei die Übersetzung sich aus der unterschiedlichen Zähneanzahl ergibt.

### Bezuaszeichen

- 100: Fahrzeug
- 105, 205: Wankstabilisator
- 110, 210: erstes Stabilisatorelement
- 115, 215: zweites Stabilisatorelement
- 120: erstes Radaufhängungselement
- 120a: erste Pendelstütze
- 125: zweites Radaufhängungselement
- 125a: zweite Pendelstütze
- 130: Aufbaulager
- 135, 235: Aktuator
- 137,237: Gehäuse
- 140: Steuerung, Elektronik
- 150, 250: Elektromotor
- 152, 252: Rotor
- 155, 255: Stator
- 160,260: Getriebe
- 161a,b,c: Planetenstufen
- 162a,b,c: Sonnenrad
- 164a,b,c: Planetenträger
- 166,266: Hohlrad
- 170: Abtrieb
- 210s: Sackloch
- 210e: Endbereich
- 215a: Absatz
- 215e: Endbereich
- 210z, 215z: Außenverzahnung
- 280: Lager
- 281: Lager
- 283a, b: Lager
- 285: Außenrad
- 290: Getriebegehäuse
- 295: Lagerbolzen
- 300: Längsachse

## Patentansprüche

1. Wankstabilisator für ein Kraftfahrzeug, aufweisend einen Aktuator (135, 235) mit einem Gehäuse (137, 237) mit einem an diesem gekoppelten ersten Stabilisatorelement (110, 210) und einem in dem Gehäuse (137, 237) befindlichen Elektromotor (150, 250), wobei ein Getriebe (160, 260) antriebsseitig mit dem Elektromotor (150, 250) gekoppelt ist und das Getriebe (160, 260) abtriebsseitig mit einem zweiten Stabilisatorelement (115, 215) gekoppelt ist, so dass die Stabilisatorelemente gegeneinander elektromechanisch verdrehbar sind, wobei das Getriebe (260) im Wesentlichen innerhalb des Elektromotors angeordnet ist, und die Endbereiche (210e, 215e) der Stabilisatorelemente (210, 215) innerhalb des Rotors angeordnet sind und in das Getriebegehäuse (260) hineinragen, **dadurch gekennzeichnet, dass** die Endbereiche (210e, 215e) jeweils eine Außenverzahnung (210z, 215z) aufweisen, wobei das Getriebegehäuse (290) drehbar um die Endbereiche (210e, 215e) herum gelagert ist.

2. Wankstabilisator nach Anspruch 1, **dadurch gekennzeichnet, dass** der Elektromotor (150, 250) einen Hohlrotor (252) aufweist und vorzugsweise als ein Vernier-Motor ausgebildet ist

3. Wankstabilisator nach Anspruch 1 oder 2, **dadurch gekennzeichnet, dass** das Getriebe (260) als Umlaufrädergetriebe ausgebildet ist.

4. Wankstabilisator nach einem der vorhergehenden Ansprüche, **dadurch gekennzeichnet, dass** das Getriebe (260) ein Getriebegehäuse (290) aufweist, welches mit dem Rotor (252) drehfest verbunden ist.

5. Wankstabilisator nach einem der vorhergehenden Ansprüche, **dadurch gekennzeichnet, dass** die Endbereiche (210e, 215e) der Stabilisatorelemente (210, 215) zumindest innerhalb des Getriebegehäuses (290) formschlüssig ineinandergreifen.

6. Wankstabilisator nach einem der vorhergehenden Ansprüche, **dadurch gekennzeichnet, dass** das Getriebe (260) gebildet wird durch zumindest ein Außenrad (285), welches drehbar innerhalb des Getriebegehäuses (290) parallel und exzentrisch zur Längsachse (300) gelagert ist, wobei das Außenrad (285) zwei Außenverzahnungsabschnitte mit einer unterschiedlichen Anzahl an Zähnen aufweist, welche mit je einer der Außenverzahnungen (210z, 215z) der Endbereiche (210e, 215e) kämmen.

7. Wankstabilisator nach dem vorhergehenden Anspruch, **dadurch gekennzeichnet, dass** die Außenverzahnung (215z) des Endbereichs (215e) des zweiten Stabilisatorelements (215) eine höhere Anzahl an Zähnen aufweist als die Außenverzahnung (210z) des Endbereichs (210e) des ersten Stabilisatorelements (210).

8. Verwendung eines Wankstabilisators (205) nach einem der vorhergehenden Ansprüche in einem Fahrwerk an zumindest einer Achse eines Kraftfahrzeuges.

## Claims

1. Roll stabilizer for a motor vehicle, having an actuator (135, 235) with a housing (137, 237) with a first stabilizer element (110, 210) coupled to said housing and with an electric motor (150, 250) situated in the housing (137, 237), wherein a transmission (160, 260) is coupled at a drive side to the electric motor (150, 250), and the transmission (160, 260) is coupled at an output side to a second stabilizer element (115, 215), such that the stabilizer elements are electromechanically rotatable relative to one another, wherein the transmission (260) is arranged substantially within the electric motor, and the end regions (210e, 215e) of the stabilizer elements (210, 215) are arranged within the rotor and project into the transmission housing (260), **characterized in that** the end regions (210e, 215e) each have an external toothing (210z, 215z), wherein the transmission housing (290) is mounted so as to be rotatable about the end regions (210e, 215e).

2. Roll stabilizer according to Claim 1, **characterized in that** the electric motor (150, 250) has a hollow rotor (252) and is preferably designed as a Vernier motor.

3. Roll stabilizer according to Claim 1 or 2, **characterized in that** the transmission (260) is in the form of an epicyclic transmission.

4. Roll stabilizer according to any of the preceding claims, **characterized in that** the transmission (260) has a transmission housing (290) which is connected rotationally conjointly to the rotor (252).

5. Roll stabilizer according to any of the preceding claims, **characterized in that** the end regions (210e, 215e) of the stabilizer elements (210, 215) engage into one another in positively locking fashion at least within the transmission housing (290).

6. Roll stabilizer according to any of the preceding claims, **characterized in that** the transmission (260) is formed by at least one external gear (285) which is mounted rotatably within the transmission housing (290) parallel and eccentrically with respect to the longitudinal axis (300), wherein the external gear (285) has two external toothing sections with a different number of teeth, which mesh with in each case one of the external toothings (210z, 215z) of the end regions (210e, 215e) .

7. Roll stabilizer according to the preceding claim, **characterized in that** the external toothing (215z) of the end region (215e) of the second stabilizer element (215) has a greater number of teeth than the external toothing (210z) of the end region (210e) of the first stabilizer element (210) .

8. Use of a roll stabilizer (205) according to any of the preceding claims in a chassis at at least one axle of a motor vehicle.

## Revendications

1. Stabilisateur antiroulis pour un véhicule automobile, présentant un actionneur (135, 235) doté d'un carter (137, 237) avec un premier élément de stabilisateur (110, 210) couplé à celui-ci, et un moteur électrique (150, 250) qui se trouve dans le carter (137, 237), un train d'engrenages (160, 260) étant couplé au moteur électrique (150, 250) côté entraînement, et le train d'engrenages (160, 260) étant couplé à un deuxième élément de stabilisateur (115, 215) côté sortie, de sorte que les éléments de stabilisateur peuvent être amenés de manière électromagnétique à tourner l'un par rapport à l'autre, le train d'engrenages (260) étant disposé substantiellement à l'intérieur du moteur électrique, et les zones d'extrémité (210e, 215e) des éléments de stabilisateur (210, 215) sont disposées à l'intérieur du rotor et font saillie dans le carter de train d'engrenages (260), **caractérisé en ce que** les zones d'extrémité (210e, 215e) présentent respectivement une denture extérieure (210z, 215z), le carter de train d'engrenages (290) étant monté rotatif autour des zones d'extrémité (210e, 215e).

2. Stabilisateur antiroulis selon la revendication 1, **caractérisé en ce que** le moteur électrique (150, 250) présente un rotor creux (252) et est de préférence réalisé sous la forme d'un moteur vernier.

3. Stabilisateur antiroulis selon la revendication 1 ou 2, **caractérisé en ce que** le train d'engrenages (260) est réalisé sous la forme d'un train épicycloïdal.

4. Stabilisateur antiroulis selon l'une quelconque des revendications précédentes, **caractérisé en ce que** le train d'engrenages (260) présente un carter de train d'engrenages (290) qui est relié au rotor (252) de manière verrouillée en rotation.

5. Stabilisateur antiroulis selon l'une quelconque des revendications précédentes, **caractérisé en ce que** les zones d'extrémité (210e, 215e) des éléments de stabilisateur (210, 215) s'engrènent par complémentarité de forme au moins à l'intérieur du carter de train d'engrenages (290).

6. Stabilisateur antiroulis selon l'une quelconque des revendications précédentes, **caractérisé en ce que** le train d'engrenages (260) est réalisé par au moins une roue extérieure (285) qui est montée rotative à l'intérieur du carter de train d'engrenages (290) en parallèle et de manière excentrique par rapport à l'axe longitudinal (300), la roue extérieure (285) présentant deux parties de denture extérieure ayant un nombre différent de dents qui s'engrènent avec respectivement l'une des dentures extérieures (210z, 215z) des zones d'extrémité (210e, 215e).

7. Stabilisateur antiroulis selon l'une quelconque des revendications précédentes, **caractérisé en ce que** la denture extérieure (215z) de la zone d'extrémité (215e) du deuxième élément de stabilisateur (215) présente un plus grand nombre de dents que la denture extérieure (210z) de la zone d'extrémité (210e) du premier élément de stabilisateur (210).

8. Utilisation d'un stabilisateur antiroulis (205) selon l'une quelconque des revendications précédentes dans un châssis sur au moins un essieu d'un véhicule automobile.
